# EUROPEAN PATENT SPECIFICATION

(11) **EP 1 775 315 B1**
(45) Date of publication and mention of the grant of the patent: **22.02.2012**
(21) Application number: 05765070.7
(22) Date of filing: 23.06.2005
(51) Int. Cl.: C08G 18/38, C08G 75/06, G02B 1/04

(54) **POLYMERIZABLE COMPOSITION**
POLYMERISIERBARE ZUSAMMENSETZUNG
COMPOSITION POLYMERISABLE

(30) Priority: 23.06.2004 JP 2004185625; 24.03.2005 JP 2005086536
(43) Date of publication of application: 18.04.2007
(73) Proprietor: MITSUBISHI GAS CHEMICAL COMPANY, INC., Chiyoda-ku, Tokyo 100-8324 (JP)
(72) Inventor: ISAHAYA, Yoshinori; c/o Mitsubishi Gas Chemical Co, chome, Tokyo;1250051 (JP); KOSHIISHI, Eiji; c/o Mitsubishi Gas Chemical Comp, chome, Tokyo;1250051 (JP); TANAKA, Hiroaki; c/o Mitsubishi Gas Chemical Comp, chome, Tokyo;1250051 (JP); YOSHIDA, Shu; c/o Mitsubishi Gas Chemical Company, chome, Tokyo;1250051 (JP); TAGAI, Shirou; c/o Mitsubishi Gas Chemical Company, chome, Tokyo;1250051 (JP); OHGI, Hiroaki; c/o Mitsubishi Gas Chemical Company, chome, Tokyo;1250051 (JP); FUJIWARA, Masahiro; c/o Mitsubishi Gas Chemical Co, chome, Tokyo;1250051 (JP); KANASAKI, Shingo; c/o Mitsubishi Gas Chemical Comp, chome, Tokyo;1250051 (JP)
(74) Representative: Gille Hrabal
(86) International application number: PCT/JP2005/011549
(87) International publication number: WO 2006/001341

(56) References cited:
- WO-A-2004/060951
- WO-A-2006/130339
- WO-A1-03/044070
- JP-A- 11 100 428
- JP-A- 11 352 302
- JP-A- 2000 256 435
- JP-A- 2001 131 257
- JP-A- 2005 008 678
- JP-A- 2005 008 710

## Description

The present invention relates to polymerizable compositions for producing optical materials, optical materials applicable to plastic lenses, prisms, optical films, fiber optics, substrates of recording media, sealers for LED, coating materials, and optical lenses such as plastic spectacle lenses.

### BACKGROUND ART

As compared with inorganic optical materials such as glass, plastic optical materials generally have advantages of being lightweight, easy to mold and capable of dyeing. Because of these advantages, plastic optical materials are recently widely used for the production of various optical products, particularly the production of spectacle lenses.

Properties which are requisite to spectacle lenses are a colorless transparency, a high refractive index and a high Abbe's number from optical aspects, and a high mechanical strength from physical aspects. A high refractive index reduces the thickness of lenses and a high Abbe's number reduces the chromatic aberration of lenses. The strength should meet the lowest levels of national regulations. In addition, a resistance to break and an easiness of perforation are required in practical uses. However, the optical materials for spectacle lenses hitherto developed are not balanced between the high refractive index, high Abbe's number and high strength.

As a high-impact optical material, a polyurethane material containing an aliphatic straight-chain oligomer has been proposed (Patent Documents 1 and 2). The proposed optical material has an Abbe's number as high as 46 and a high impact resistance, when expressed by a falling ball impact energy, of 12 J or more, but has a refractive index as extremely low as about 1.53.

An optical material made of a polycarbonate resin has a higher refractive index and has come to be used mainly in U.S.A. The refractive index is as high as 1.60, and the impact resistance is extremely high because the falling ball impact energy is 12 J or more. However, the Abbe's number is as low as 30 because of a large number of benzene rings in the molecular structure of polycarbonate. Therefore, the proposed optical material containing polycarbonate causes the chromatic aberration.

A heat-curing optical material having a thiourethane structure which is formed by the reaction of a polythiol compound and a polyisocyanate compound is proposed and on markets as an optical material balanced in the refractive index and the Abbe's number. Examples thereof include "EYAS" of Hoya Corporation and "MR-90" of Mitsui Chemicals, Inc. Both are well balanced because the refractive index is 1.60 and the Abbe's number is 42, and have come to dominate in the high refractive lens in Japan. However, both materials are not satisfactory in the strength because the falling ball impact energy is as low as 3.6 J or less.

A composite material of a polyurethaneurea and an episulfide compound is proposed as an optical material balanced in the refractive index, Abbe's number and strength (Patent Document 3). The proposed optical material has well-balanced optical properties of refractive index/Abbe's number from 1.63137 to 1.58/44 and has an extremely high impact resistance. However, as a result of study made by the inventors, it was found that in the reaction between a polyisocyanate prepolymer of a long-chain aliphatic diol, an aromatic diamine and an episulfide compound the reaction between the polyisocyanate prepolymer with the aromatic diamine proceeded quite rapidly as compared with the polymerization of the episulfide compound, this making the cast polymerization under known conditions quite difficult. Therefore, the proposed optical material involves a problem in its industrial production.

Patent Document 1: US 5,962,617
Patent Document 2: US 6,127,505
Patent Document 3: WO 03/020786

### DISCLOSURE OF THE INVENTION

An object of the present invention is to provide a polymerizable composition for the production of optical materials which have a refractive index of around 1.60, an Abbe's number of around 40 and a high strength (impact resistance).

As a result of extensive research by the inventors, it has been found that the above object can be achieved by optical materials which are produced by the polymerization for curing of a polymerizable composition containing the following four components A, B, C and D.

Thus, the present invention relates to a polymerizable composition containing:
(A) a compound having two mercapto groups in one molecule and a compound having three or more mercapto groups in one molecule;
(B) a NCO-terminated polyurethane prepolymer;
(C) a polyisocyanate compound; and
(D) an episulfide compound having in its molecule at least one structural group represented by the following formula 1: 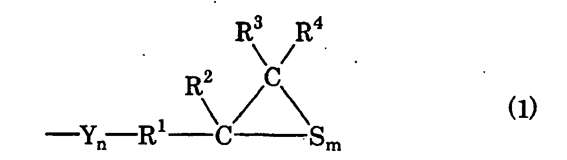
wherein R¹ is a divalent hydrocarbon group having from 1 to 10 carbon atoms or a single bond, R², R³ and R⁴ are each independently a hydrocarbon group having from 1 to 10 carbon atoms or hydrogen, Y is O or S, m is an integer of from 1 to 5, and n is an integer of from 0 to 5.

### BEST MODE FOR CARRYING OUT THE INVENTION

The present invention is based on the finding that highly impact-resistant optical materials having good optical properties can be produced from a polymerizable composition containing an episulfide compound having the structural group of the formula 1 and a NCO-termihated polyurethane prepolymer. In the present invention, the high refractive index is achieved by the blending of the episulfide compound and the impact resistance is achieved by the blending of the NCO-terminated polyurethane prepolymer. The present invention relates to a unique technique which achieves the impact resistance and optical properties by a simple system.

The optical material of the present invention has a refractive index/Abbe's number of around 1.60/around 40, preferably 1.58 to 1.62/38 to 42, and more preferably 1.59 to 1.61/39 to 41 because of easiness of the production and preparation.

The blending ratio of each component of the polymerizable composition varies depending upon the refractive index and viscosity of each component and the intended properties of resultant optical materials, and preferably from 1 to 40% by weight for the component A, from 1 to 70% by weight for the component B, from 1 to 50% by weight for the component C, and from 1 to 70% by weight for the component D. Within the above ranges, an optical material having a high impact resistance, a high refractive index, and a high Abbe's number is obtained. The blending ratio is more preferably from 5 to 40% by weight for the component A, from 15 to 60% by weight for the component B, from 1 to 35% by weight for the component C, and from 10 to 50% by weight for the component D, and still more preferably from 5 to 25% by weight for the component A, from 20 to 50% by weight for the component B, from 1 to 25% by weight for the component C, and from 20 to 40% by weight for the component D.

The compounds of the component A have two or more mercapto groups in one molecule and the molecular weight thereof is preferably 600 or less. Examples of the compounds of component include methanedithiol, methanetrithiol, 1,2-dimercaptoethane, 1,2-dimercaptopropane, 1,3-dimercaptopropane, 2,2-dimercaptopropane, 1,4-dimercaptobutane, 1,6-dimercaptohexane, bis(2-mercaptoethyl) ether, bis(2-mercaptoethyl) sulfide, 1,2-bis(2-mercaptoethyloxy)ethane, 1,2-bis(2-mercaptoethylthio)ethane, 2,3-dimercapto-1-propanol, 1,3-dimercapto-2-propanol, 1,2,3-trimercaptopropane, 2-mercaptomethyl-1,3-dimercaptopropane, 2-mercaptomethyl-1,4-dimercaptobutane, 2-(2-mercaptoethylthio)-1,3-dimercaptopropane, 4-mercaptomethyl-1,8-dimercapto-3,6-dithiaoctane, 2,4-dimercaptomethyl-1,5-dimercapto-3-thiapentane, 4,8-dimercaptomethyl-1,11-dimercapto-3,6,9-trithiaundecane, 4,7-dimercaptomethyl-1,11-dimercapto-3,6,9-trithiaundecane, 5,7-dimercaptomethyl-1,11-dimercapto-3,6,9-trithiaundecane, 1,1,1-tris(mercaptomethyl)propane, tetrakis(mercaptomethyl)methane, ethylene glycol bis(2-mercaptoacetate), ethylene glycol bis(3-mercaptopropionate), diethylene glycol bis(2-mercaptoacetate), diethylene glycol bis(3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), trimethylolpropane trismercaptoglycolate, pentaerythritol tetrakis(2-mercaptoacetate), pentaerythritol tetrakis(3-mercaptopropionate), pentaerythritol tetrakismercaptoglycolate, 1,2-dimercaptocyclohexane, 1,3-dimercaptocyclohexane, 1,4-dimercaptocyclohexane, 1,3-bis(mercaptomethyl)cyclohexane, 1,4-bis(mercaptomethyl)cyclohexane, 2,5-bis(mercaptomethyl)-1,4-dithiane, 2,5-bis(2-mercaptoethyl)-1,4-dithiane, 2,5-bis(2-mercaptoethylthiomethyl)-1,4-dithiane, 2,5-bis(mercaptomethyl)-1-thiane, 2,5-bis(2-mercaptoethyl)-1-thiane, 2,5-bis(mercaptomethyl)thiophene, 1,2-dimercaptobenzene, 1,3-dimercaptobenzene, 1,4-dimercaptobenzene, 1,3-bis(mercaptomethyl)benzene, 1,4-bis(mercaptomethyl)benzene, 2,2'-dimercaptobiphenyl, 4, 4'-dimercaptobiphenyl, bis(4-mercaptophenyl)methane, 2,2-bis(4-mercaptophenyl)propane, bis(4-mercaptophenyl) ether, bis(4-mercaptophenyl) sulfide, bis(4-mercaptophenyl) sulfone, bis(4-mercaptomethylphenyl)methane, 2,2-bis(4-mercaptomethylphenyl)propane, bis(4-mercaptomethylphenyl) ether, bis(4-mercaptomethylphenyl) sulfide, 2,5-dimercapto-1,3,4-thiadiazole, 3,4-thiophenedithiol, glyceryl dithioglycolate, bis(2-mercaptoethyl) selenide, bis(1,3-dimercapto-2-propyl) selenide, 2,3-bis(mercaptoethylseleno)-1-propanethiol, 2-mercaptomethyl-1,5-dimercapto-3-selenapentane, 4,8-bis(mercaptomethyl)-1,11-dimercapto-3,9-dithia-6-selenaundecane, 4,8-bis(mercaptomethyl)-1,11-dimercapto-6-thia-3,9-diselenaundecane, 4,8-bis(mercaptomethyl)-1,11-dimercapto-3,6,9-triselenaundecane, bis(hydroxymercaptoethylselenomethyl)benzene, 1,4-dimercapto2,3-bis(mercaptoethylseleno)butane, 1,2,3,4-tetrakis(mercaptoethylseleno)butane, 1,9-dimercapto-5,5-bis(mercaptomethyl)-3,7-diselenanonane, tris(mercaptomethyl)-1,8-dimercapto-6-thia-3-selenaoctane, bis(mercaptoethylselenomethyl)benzene, 2,5-bis(mercaptoethylselenomethyl)-1,4-dithiane, 2,6-dimercapto-1-selena-4-thiane, 3,5-dimercapto-1-selena-4-thiane, 2,6-bis(mercaptomethyl)-1-selena-4-thiane, 3,5-bis(mercaptomethyl)-1-selena-4-thiane, 2,5-dimercapto-1,4-diselenane, 2,6-dimercapto-1,4-diselenane, 2,5-bis(mercaptomethyl)-1,4-diselenane, 2,6-bis(mercaptomethyl)-1,4-diselenane, 2,5-dimercaptoselenane, 3,4-dimercaptoselenane, 2,5-bis(mercaptomethyl)selenane, 3,4-bis(mercaptomethyl)selenane, 4,5-dimercapto-1,3-diselenolane, 4,5-bis(mercaptomethyl)-1,3-diselenolane, 3,6-dimercaptotriselenocyclooctane, and 3,6-bis(mercaptomethyl)triselenocyclooctane. These compounds may be used alone or in combination of two or more.

Preferred component A are bis(2-mercaptoethyl) sulfide, trimethylolpropane tris(3-mercaptopropionate), trimethylolpropane trismercaptoglycolate, pentaerythritol tetrakis(3-mercaptopropionate), pentaerythritol tetrakismercaptoglycolate, and 2,5-bis(2-mercaptomethyl)-1,4-dithian, and still more preferred are bis(2-mercaptoethyl) sulfide, trimethylolpropane tris(3-mercaptopropionate), pentaerythritol tetrakis(3-mercaptopropionate), and 2,5-bis(2-mercaptomethyl)-1,4-dithian. These compounds may be used alone or in combination of two or more. It is the feature of the invention to combinedly use a compound having two mercapto groups in one molecule and a compound having three or more mercapto groups in one molecule.

The component B is the NCO-terminated polyurethane prepolymer, which is prepared from two starting material: one is a polyol compound having two or more OH groups in its molecule (starting material B1) and the other is a polyisocyanate compound having two or more NCO groups in its molecule (starting material B2).

The polyol compound (starting material B1) may be an aliphatic straight-chain polyol compound or a straight-chain polyol compound having an aliphatic and aromatic groups, each serving as a soft segment and having a number average molecular weight of from 100 to 3000. If being 100 or more, the properties as the soft segment are sufficient and the impact resistance of resultant molded articles is good. If being 3000 or less, the compatibility with the episulfide compound is good and the handling is easy because the increase in the viscosity is prevented. Preferred are an aliphatic straight-chain polyol compound and a straight-chain polyol compound having an aliphatic and aromatic groups each having a number average molecular weight of from 400 to 2000, and more preferred are an aliphatic straight-chain diol and a straight-chain diol having an aliphatic and aromatic groups each having a number average molecular weight of from 400 to 2000.

Examples of the polyol compound (starting material B1) includes polyoxyalkylene glycols such as polyoxyethylene glycol, polyoxypropylene glycol, polyoxytetramethylene glycol and polyoxypentamethylene glycol; polylactone polyols such as polyvalerolactone diol and polycaprolactone diol; polyester polyols produced by the reaction of at least one dibasic acid such as adipic acid, sebacic acid, maleic acid, terephthalic acid and isophthalic acid with at least one polyol such as ethylene glycol, propylene glycol (inclusive of isomers), butanediol (inclusive of isomers), hexanediol (inclusive of isomers), methylpentanediol (inclusive of isomers), nonanediol (inclusive of isomers), methyloctanediol (inclusive of isomers), cyclohexanemethanol (inclusive of isomers), glycerol, phloroglucinol, hexanetriol, trimethylolethane, trimethylolpropane and pentaerythritol; and polycarbonate diols produced by the reaction of at least one of hexanediol (inclusive of isomers), methylpentanediol (inclusive of isomers), nonanediol (inclusive of isomers), methyloctanediol (inclusive of isomers) with at least one carbonate compound such as phosgene. These polyol compounds may be used alone or in combination of two or more.

Preferred are polycaprolactone diol; polyester diols which are produced from the combination of adipic acid and 3-methyl-1,5-pentanediol, sebacic acid and 3-methyl-1,5-pentanediol, terephthalic acid and 3-methyl-1,5-pentanediol, isophthalic acid and 3-methyl-1,5-pentanediol, adipic acid, terephthalic acid and 3-methyl-1,5-pentanediol, and adipic acid, isophthalic acid and 3-methyl-1,5-pentanediol; and polycarbonate diols which are produced by the reaction of 1,6-hexanediol or 1,6-hexanediol and 3-methyl-1,5-pentanediol with a carbonate compound such as phosgene. More preferred are polycaprolactone diol; polyester diols which are produced from the combination of adipic acid and 3-methyl-1,5-pentanediol, terephthalic acid and 3-methyl-1,5-pentanediol, isophthalic acid and 3-methyl-1,5-pentanediol, adipic acid, terephthalic acid and 3-methyl-1,5-pentanediol, and adipic acid, isophthalic acid and 3-methyl-1,5-pentanediol; and polycarbonate diols which are produced by the reaction of 1,6-hexanediol or 1,6-hexanediol and 3-methyl-1,5-pentanediol with a carbonate compound such as phosgene. Still more preferred are polycaprolactone diol; polyester diols which are produced from the combination of adipic acid and 3-methyl-1,5-pentanediol, terephthalic acid and 3-methyl-1,5-pentanediol, isophthalic acid and 3-methyl-1,5-pentanediol, adipic acid, terephthalic acid and 3-methyl-1,5-pentanediol, and adipic acid, isophthalic acid and 3-methyl-1,5-pentanediol; and polycarbonate diols which are produced by the reaction of 1,6-hexanediol or 1,6-hexanediol and 3-methyl-1,5-pentanediol with a carbonate compound such as phosgene, each having a number average molecular weight of from 400 to 1000.

The starting material B2 is a polyisocyanate compound having two or more NCO groups in its molecule, and preferably a diisocyanate compound having two NCO groups in its molecule, each having a molecular weight of 500 or less. Examples thereof include diethylene diisocyanate, tetramethylene diisocyanate, hexamethylene diisocyanate, trimethylhexamethylene diisocyanate, cyclohexane diisocyanate, 1,3-bis(isocyanatomethyl)cyclohexane, 1,4-bis(isocyanatomethyl)cyclohexane, isophorone diisocyanate, 2,6-bis(isocyanatomethyl)decahydronaphthalene, lysine triisocyanate, 2,4-tolylene diisocyanate, 2,6-tolylene diisocyanate, o-tolidine diisocyanate, 4,4'-diphenylmethane diisocyanate, diphenyl ether diisocyanate, 3-(2'-isocyanatocyclohexyl)propyl isocyanate, tris(phenyl isocyanate)thiophosphate, isopropylidenebis(cyclohexyl isocyanate), 2,2'-bis(4- isocyanatophenyl)propane, triphenylmethane triisocyanate, bis(diisocyanatotolyl)phenylmethane, 4,4',4"-triisocyanato-2,5-dimethoxyphenylamine, 3,3'-dimethoxybenzidine 4,4'-diisocyanate, 1,3-phenylene diisocyanate, 1,4-phenylene diisocyanate, 4,4'-diisocyanatobiphenyl, 4,4'-diisocyanato-3,3'-dimethylbiphenyl, dicyclohexylmethane-4,4'-diisocyanate, 1,1'-methylenebis(4-isocyanatobenzene), 1,1-methylenebis(3-methyl-4-isocyanatobenzene), m-xylylene diisocyanate, p-xylylene diisocyanate, 1,3-bis(1- isocyanato-1-methylethyl)benzene, 1,4-bis(1-isocyanato-1-methylethyl)benzene, 1,3-bis(2-isocyanato-2-propyl)benzene, 2,6-bis(isocyanatomethyl)naphthalene, 1,5-naphthalene diisocyanate, bis(isocyanatomethyl)tetrahydrodicyclopentadiene, bis(isocyanatomethyl)dicyclopentadiene, bis(isocyantomethyl)tetrahydrothiophene, 2,5-diisocyanatomethylnorbornene, dimer acid (diisocyanate, 1,3,5-tri(1-isocyanatohexyl) isocyanurate, bis(isocyanatomethyl)adamantane, thiodiethyl diisocyanate, thiodipropyl diisocyanate, thiodihexyl diisocyanate, bis[(4-isocyanatomethyl)phenyl] sulfide, 2,5-diisocyanato-1,4-dithiane, 2,5-diisocyanatomethyl-1,4-dithiane, 2,5-diisocyanatomethylthiophene, dithiodiethyl diisocyanate, and dithiodipropyl diisocyanate. These polyisocyanate compounds may be used alone or in combination of two or more.

Preferred polyisocyanate compounds (starting material B2) are 1,3-bis(isocyanatomethyl)cyclohexane, 4,4'-diphenylmethane diisocyanate, dicyclohexylmethane-4,4'-diisocyanate, m-xylylene diisocyanate, and 3-bis(2-isocyanato-2-propyl)benzene, more preferably dicyclohexylmethane-4,4'-diisocyanate.

The polyurethane prepolymer may be produced by the reaction of the starting material B1 (polyol compound) and the starting material B2 (polyisocyanate compound) under heating. For example, the starting material B1 and the starting material B2 are mixed in a ratio NCO/OH of 1.1 to 4 by mole and reacted at 90 to 140°C for 1 to 5 h. The number average molecular weight of the polyurethane prepolymer thus obtained is preferably from 1,000 to 10,000. It is also preferred that 90 % or more (inclusive of 100%) of the terminal groups of the polyurethane prepolymer is NCO group.

The component C is at least one compound selected from the polyisocyanate compounds which are mentioned above as the starting material B2 for the component B.

The component D is an episulfide compound having in its molecule at least one structural group represented by the following formula 1: 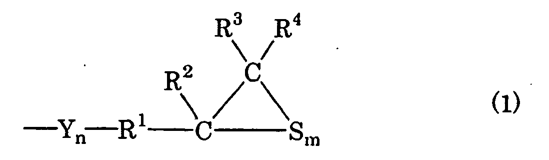 wherein R¹ is a divalent hydrocarbon group having from 1 to 10 carbon atoms or a single bond, R², R³ and R⁴ are each independently a hydrocarbon group having from 1 to 10 carbon atoms or hydrogen, Y is O or S, m is an integer of from 1 to 5, and n is an integer of from 0 to 5.

R¹ is preferably methylene group, ethylene group or a single bond, and more preferably methylene group. Each of R², R³ and R⁴ is preferably methyl group or hydrogen, and more preferably hydrogen. Y is preferably S. The suffix m is preferably 1 or 2, and more preferably 1. The suffix n is preferably 0 or 1.

Preferred episulfide compounds are those having two or more structural groups of the formula 1 wherein Y is S and having a molecular weight of 500 or less. More preferred episulfide compounds are represented by the following formula 2: 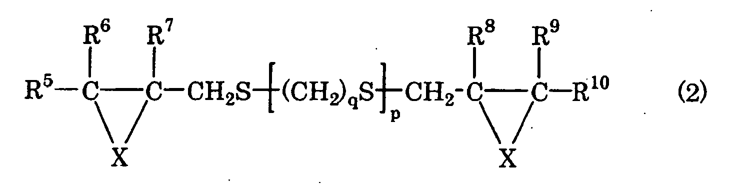 wherein R⁵ to R¹⁰ are each independently a hydrocarbon group having from 1 to 5 carbon atoms or hydrogen, X is S or O, q is an integer of from 0 to 6 and p is an integer of from 0 to 4, with the proviso that at least one of X is S. The suffix q is preferably an integer of from 0 to 3, and more preferably 0 or 1. The suffix p is preferably an integer of from 0 to 2, and more preferably 0 or 1. Each of R⁵ to R¹⁰ is preferably methyl group or hydrogen.

Examples of the episulfide compounds include bis(β-epithiopropyl) sulfide, 1,1-bis(epithioethyl)methane, 1-(epithioethyl)-1-(β-epithiopropyl)methane, 1,1-bis(β-epithiopropyl)methane, 1-(epithioethyl)-1-(β-epithiopropyl)ethane, 1,2-bis(β-epithiopropyl)ethane, 1-(epithioethyl)-3-(β-epithiopropyl)butane, 1,3-bis(β-epithiopropyl)propane, 1-(epithioethyl)-4-(β-epithiopropyl)pentane, 1,4-bis(β-epithiopropyl)butane, 1-(epithioethyl)-5-(β-epithiopropyl)hexane, 1-(epithioethyl)-2-(γ-epithiobutylthio)ethane, 1-(epithioethyl)-2-[2-(γ-epithiobutylthio)ethylthio]ethane, tetrakis(β-epithiopropyl)methane, 1,1,1-tris(β-epithiopropyl)propane, 1,3.bis(β-epithiopropyl)-1-(β-epithiopropyl)-2-thiapropane, 1,5-bis(β-epithiopropyl)-2,4-bis(β-epithiopropyl)-3-thiapentane,1,3- or 1,4-bis(epithioethyl)cyclohexane, 1,3- or 1,4-bis(β-epithiopropyl)cyclohexane, bis[4-(epithioethyl)cyclohexyl]methane, bis[4-(β-epithiopropyl)cyclohexyl]methane, 2,2-bis[4-(epithioethyl)cyclohexyl]propane, 2,2-bis[4-(β-epithiopropyl)cyclohexyl]propane, bis[4-(β-epithiopropyl)cyclohexyl] sulfide, bis[4-(epithioethyl)cyclohexyl] sulfide, 2,5-bis(epithioethyl)-1,4-dithiane, 2,5-bis(β-epithiopropyl)-1,4-dithiane, 4-epithioethyl-1,2-cyclohexene sulfide, 1,3- or 1,4-bis(epithioethyl)benzene, 1,3- or 1,4-bis(β-epithiopropyl)benzene, bis[4-(epithioethyl)phenyl]methane, bis[4-(β-epithiopropyl)phenyl]methane, 2,2-bis[4-(epithioethyl)phenyl]propane, 2,2-bis[4-(β-epithiopropyl)phenyl]propane, bis[4-(epithioethyl)phenyl] sulfide, bis[4-(β-epithiopropyl)phenyl] sulfide, bis[4-(epithioethyl)phenyl] sulfone, bis[4-(β-epithiopropyl)phenyl] sulfone, 4,4'-bis(epithioethyl)biphenyl, 4,4'-bis(β-epithiopropyl)biphenyl, 1,5-bis(2,3-epithiopropyl)-1,2,4,5-tetrathiapentane, 1,6-bis(2,3-epithiopropyl)-1,2,5,6-tetrathiahexane, 1,2,3-tris(4,5-epithio-1,2-dithiapentyl)propane, bis(β-epithiopropyl) disulfide, bis(epithioethyl) disulfide, bis(β-epithiopropyl) trisulfide, methylthioglycidyl ether, ethylthioglycidyl ether, propylthioglycidyl ether, butylthioglycidyl ether, bis(β-epithiopropyl) ether, bis(β-epithiopropyloxy)methane, 1,2-bis(β-epithiopropyloxy)ethane, 1,3-bis(β-epithiopropyloxy)propane, 1,2-bis(β-epithiopropyloxy)propane, 1-(β-epithiopropyloxy)-2-(β-epithiopropyloxymethyl)propane, 1,4-bis(β-epithiopropyloxy)butane, 1,3-bis(β-epithiopropyloxy)butane, 1-(β-epithiopropyloxy)-3-(β-epithiopropyloxymethyl)butane, 1,5-bis(β-epithiopropyloxy)pentane, 1-(β-epithiopropyloxy)-4-(β-epithiopropyloxymethyl)pentane,1,6-bis(β-epithiopropyloxy)hexane, 1-(β-epithiopropyloxy)-5-(β-epithiopropyloxymethyl)hexane, 1-(β-epithiopropyloxy)-2-[(2-β-epithiopropyloxyethyl)oxy]ethane, 1-(β-epithiopropyloxy)-2-[[2-(2-β-epithiopropyloxyethyl)oxyethyl]oxy]ethane, tetrakis(β-epithiopropyloxymethyl)methane, 1,1,1-tris(β-epithiopropyloxymethyl)propane, 1,5-bis(β-epithiopropyloxy)-2-(β-epithiopropyloxymethyl)-3-thiapentane, 1,5-bis(β-epithiopropyloxy)-2,4-bis(β-epithiopropyloxymethyl)-3-thiapentane, 1-(β-epithiopropyloxy)-2,2-bis(β-epithiopropyloxymethyl)-4-thiahexane, 1,5,6-tris(β-epithiopropyloxy)-4-(β-epithiopropyloxymethyl)-3-thiahexane, 1,8-bis(β-epithiopropyloxy)-4-(β-epithiopropyloxymethyl)-3,6-dithiaoctane, 1,8-bis(β-epithiopropyloxy)-4,5-bis(β-epithiopropyloxymethyl)-3,6-dithiaoctane, 1,8-bis(β-epithiopropyloxy)-4,4-bis(β-epithiopropyloxymethyl)-3,6-dithiaoctane, 1,8-bis(β-epithiopropyloxy)-2,4,5-tris(β-epithiopropyloxymethyl)-3,6-dithiaoctane, 1,8-bis(β-epithiopropyloxy)-2,5.bis(β-epithiopropyloxymethyl)-3,6-dithiaoctane, 1,9-bis(β-epithiopropyloxy)-5-(β-epithiopropyloxymethyl)-5-[(2-β-epithiopropyloxyethyl)-oxymethyl]-3,7-dithianonane, 1,10-bis(β-epithiopropyloxy)-5,6-bis [(2-β-epithiopropyloxyethyl)oxy]-3,6,9-trithiadecane, 1,11-bis(β-epithiopropyloxy)-4,8-bis(β-epithiopropyloxymethyl)-3,6,9-trithiaundecane, 1,11-bis(β-epithiopropyloxy)-5,7-bis(β-epithiopropyloxymethyl)-3,6,9-trithiaundecane, 1,11-bis(β-epithiopropyloxy)-5,7-[(2-β-epithiopropyloxyethyl)oxymethyl]-3,6,9-trithiaundecane, 1,11-bis(β-epithiopropyloxy)-4,7-bis(β-epithiopropyloxymethyl)-3,6,9-trithiaundecane, 1,3-or 1,4-bis(β-epithiopropyloxy)cyclohexane, 1,3- or 1,4-bis(β-epithiopropyloxymethyl)cyclohexane, bis[4-(β-epithiopropyloxy)cyclohexyl]methane, 2,2-bis[4-(β-epithiopropyloxy)cyclohexyl]propane, bis[4-(β-epithiopropyloxy)cyclohexyl] sulfide, 2,5-bis(β-epithiopropyloxymethyl)-1,4-dithiane, 2,5-bis(β-epithiopropyloxyethyloxymethyl)-1,4-dithiane, 1,3- or 1,4-bis(β-epithiopropyloxy)benzene, 1,3- or 1,4-bis(β-epithiopropyloxymethyl)benzene, bis[4-(β-epithiopropyl)phenyl]methane, 2,2-bis[4-(β-epithiopropylthio)phenyl]propane, bis[4-(β-epithiopropylthio)phenyl] sulfide, bis[4-(β-epithiopropylthio)phenyl] sulfone, 4,4'-bis(β-epithiopropylthio)biphenyl, bis(epithioethyl) sulfide, bis(epithioethyl) disulfide, bis(β-epithiopropyl) sulfide, bis(β-epithiopropyl) disulfide, bis(β-epithiopropyl) trisulfide, bis(β-epithiopropylthio)methane, 1,2-bis(β-epithiopropylthio)ethane, 1,3-bis(β-epithiopropylthio)propane, 1,2-bis(β-epithiopropylthio)propane, 1-(β-epithiopropylthio)-2-(β-epithiopropylthiomethyl)propane, 1,4-bis(β-epithiopropylthio)butane, 1,3-bis(β-epithiopropylthio)butane, 1-(β-epithiopropylthio)-3-(β-epithiopropylthiomethyl)butane, 1,5-bis(β-epithiopropylthio)pentane, 1-(β-epithiopropylthio)-4-(β-epithiopropylthiomethyl)pentane, 1,6-bis(β-epithiopropylthio)hexane, 1-(β-epithiopropylthio)-5-(β-epithiopropylthiomethyl)hexane, 1-(β-epithiopropylthio)-2-[(2-β-epithiopropylthioethyl)thio]ethane, 1-(β-epithiopropylthio)-2-[[2-(2-β-epithiopropylthioethyl)thioethyl]thio]ethane, tetrakis(β-epithiopropylthiomethyl)methane, 1,1,1-tris(β-epithiopropylthiomethyl)propane, 1,5-bis(β-epithiopropylthio)-2-(β-epithiopropylthiomethyl)-3-thiapentane, 1,5-bis(β-epithiopropylthio)-2,4-bis(β-epithiopropylthiomethyl)-3-thiapentane, 1-(β-epithiopropylthio)-2,2-bis(β-epithiopropylthiomethyl)-4-thiahexane, 1,5,6-tris(β-epithiopropylthio)-4-(β-epithiopropylthiomethyl)-3-thiahexane, 1,8-bis(β-epithiopropylthio)-4-(β-epithiopropylthiomethyl)-3,6-dithiaoctane, 1,8-bis(β-epithiopropylthio)-4,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1,8-bis(β-epithiopropylthio)-2,5-bis(β-epithiopropylthiomethyl)-3,6-dithiaoctane, 1,9-bis(β-epithiopropylthio)-5-(β-epithiopropylthiomethyl)-5-[(2-β-epithiopropylthioethyl)thiomethyl]-3,7-dithianonane, 1,10-bis(β-epithiopropylthio)-5,6-bis[(2-β-epithiopropylthioethyl)thio]-3,6,9-trithiadecane, 1,11-bis(β-epithiopropylthio)-4,8-bis(β-epithiopropylthiomethyl)-3,6,9-trithiaundecane, 1,11-bis(β-epithiopropylthio)-5,7-bis(β-epithiopropylthiomethyl)-3,6,9-trithiaundecane, 1,11-bis(β-epithiopropylthio)-5,7-[(2-β-epithiopropylthioethyl)thiomethyl]-3,6,9-trithiaundecane, 1,11-bis(β-epithiopropylthio)-4,7-bis(β-epithiopropylthiomethyl)-3,6,9-trithiaundecane, tetra[2-β-epithiopropylthio)acetylmethyl]methane, 1,11-tri[2'(β-epithiopropylthio)acetylmethyl]propane, tetra[2-(β-epithiopropylthiomethyl)acetylmethyl]methane, 1,11-tri[2-(β-epithiopropylthiomethyl)acetylmethyl]propane, 1,3- or 1,4-bis(β-epithiopropylthio)cyclohexane, 1,3- or 1,4-bis(β-epithiopropylthiomethyl)cyclohexane, bis[4-(β-epithiopropylthio)cyclohexyl]methane, 2,2-bis[4-(β-epithiopropylthio)cyclohexyl]propane, bis[4-(β-epithiopropylthio)cyclohexyl] sulfide, 2,5-bis(β-epithiopropylthiomethyl)-1,4-dithiane, 2,5-bis(β-epithiopropylthioethylthiomethyl)-1,4-dithiane, 1,3- or 1,4-bis(β-epithiopropylthio)benzene, 1,3- or 1,4-bis(β-epithiopropylthiomethyl)benzene, bis[4-(β-epithiopropylthio)phenyl]methane, 2,2-bis(4-(β-epithiopropylthio)phenyl]propane, bis[4(β-epithiopropylthio)phenyl] sulfide, bis[4-(β-epithiopropylthio)phenyl] sulfone, 4,4'-bis(β-epithiopropylthio)biphenyl, vinylphenylthioglycidyl ether, vinylbenzylthioglycidyl ether, thioglycidyl methacrylate, thioglycidyl acrylate, and allyl thioglycidyl ether. These compounds may be used alone or in combination of two or more.

Preferred episulfide compound is bis(β-epithiopropyl) sulfide or bis(β-epithiopropyl) disulfide, and more preferred is bis(β-epithiopropyl) sulfide.

The polymerizable composition containing the components A, B, C and D is made into the optical material by the polymerization under heating in the presence of a curing catalyst such as amines, phosphines, quaternary ammonium salts, quaternary phosphonium salts, tertiary sulfonium salts, secondary iodonium salts, mineral acids, Lewis acids, organic acids, silicic acid, tetrafluoroboric acid, peroxides, azo compounds, condensates of aldehyde and amine compound, guanidine compounds, thiourea compounds, thiazole compounds, sulfenamide compounds, thiuram compounds, dithiocarbamic salts, xanthic salts, and acid phosphoric esters. Specific examples thereof are recited below.

### (1) Amines:

primary amines such as ethylamine, n-propylamine, sec-propylamine, n-butylamine, sec-butylamine, isobutylamine, tert-butylamine, pentylamine, hexylamine, heptylamine, octylamine, decylamine, laurylamine, myristylamine, 1,2-dimethylhexylamine, 3-pentylamine, 2-ethylhexylamine, allylamine, aminoethanol, 1-aminopropanol, 2-aminopropanol, aminobutanol, aminopentanol, aminohexanol, 3-ethoxypropylamine, 3-propoxypropylamine, 3-isopropoxypropylamine, 3-butoxypropylamine, 3-isobutoxypropylamine, 3-(2-ethylhexyloxy)propylamine, aminocyclopentane, aminocyclohexane, aminonorbornene, aminomethylcyclohexane, aminobenzene, benzylamine, phenethylamine, α-phenylethylamine, naphthylamine, and furfurylamine; primary polyamines such as ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, 1,7-diaminoheptane, 1,8-diaminooctane, dimethylaminopropylamine, diethylaminopropylamine, bis-(3-aminopropyl) ether, 1,2-bis-(3-aminopropoxy)ethane, 1,3-bis-(3-aminopropoxy)-2,2'-dimethylpropane, aminoethylethanolamine, 1,2-, 1,3- or 1,4-bisaminocyclohexane, 1,3- or 1,4-bisaminomethylcyclohexane, 1,3- or 1,4-bisaminoethylcyclohexane, 1,3- or 1,4-bisaminopropylcyclohexane, hydrogenated 4,4'-diaminodiphenylmethane, 2- or 4-aminopiperidine, 2- or 4-aminomethylpiperidine, 2- or 4-aminoethylpiperidine, N-aminoethylpiperidine, N-aminopropylpiperidine, N-aminoethylmorpholine, N-aminopropylmorpholine, isophoronediamine, menthanediamine, 1,4-bisaminopropylpiperazine, o-, m-, or p-phenylenediamine, 2,4- or 2,6-tolylenediamine, 2,4-toluenediamine, m-aminobenzylamine, 4-chloro-o-phenylenediamine, tetrachloro-p-xylylenediamine, 4-methoxy-6-methyl-m-phenylenediamine, m- or p-xylylenediamine, 1,5- or 2,6-naphthalenediamine, benzidine, 4,4'-bis(o-toluidine), dianisidine, 4,4'-diaminodiphenylmethane , 2,2-(4,4'-diaminodiphenyl)propane, 4,4'-diaminodiphenyl ether, 4,4'-thiodianiline, 4,4'-diaminodiphenyl sulfone, 4,4'-diaminoditolyl sulfone, methylenebis(o-chloroaniline), 3,9-bis(3-aminopropyl)-2,4,8,10-tetraoxaspiro[5,5]undecane, diethylenetriamine, iminobispropylamine, methyliminobispropylamine, bis(hexamethylene)triamine, triethylenetetramine, tetraethylenepentamine, pentaethylenehexamine, N-aminoethylpiperazine, N-aminopropylpiperazine, 1,4-bis(aminoethylpiperazine), 1,4-bis(aminopropylpiperazine), 2,6-diaminopyridine, and bis(3,4-diaminophenyl) sulfone;
secondary amines such as diethylamine, dipropylamine, di-n-butylamine, di-sec-butylamine, diisobutylamine, di-n-pentylamine, di-3-pentylamine, dihexylamine, octylamine, bis(2-ethylhexyl)amine, methylhexylamine, diallylamine, pyrrolidine, piperidine, 2-, 3- or 4-picoline, 2,4-, 2,6- or 3,5-lupetidine, diphenylamine, N-methylaniline, N-ethylaniline, dibenzylamine, methylbenzylamine, dinaphthylamine, pyrrole, indoline, indole, and morpholine;
secondary polyamines such as N,N'-dimethylethylenediamine, N,N'-dimethyl-1,2-diaminopropane, N,N'-dimethyl-1,3-diaminopropane, N,N'-dimethyl-1,2-diaminobutane, N,N'-dimethyl-1,3-diaminobutane, N,N'-dimethyl-1,4-diaminobutane, N,N'-dimethyl-1,5-diaminopentane, N,N'-dimethyl-1,6-diaminohexane, N,N'-dimethyl-1,7-diaminoheptane, N,N'-diethylethylenediamine, N,N'-diethyl-1,2-diaminopropane, N,N'-diethyl-1,3-diaminopropane, N,N'-diethyl-1,2-diaminobutane, N,N'-diethyl-1,3-diaminobutane, N,N'-diethyl-1,4-diaminobutane, N,N'-diethyl-1,6-diaminohexane, piperazine, 2-methylpiperazine, 2,5- or 2,6-dimethylpiperazine, homopiperazine, 1,1-di(4-piperidyl)methane, 1,2-di(4-piperidyl)ethane, 1,3-di(4-piperidyl)propane, and 1,4-di(4-piperidyl)butane; tertiary amines such as trimethylamine, triethylamine, tri-n-propylamine, triisopropylamine, tri-1,2-dimethylpropylamine, tri-3-methoxypropylamine, tri-n-butylamine, triisobutylamine, tri-sec-butylamine, tripentylamine, tri-3-pentylamine, tri-n-hexylamine, tri-n-octylamine, tri-2-ethylhexylamine, tridodecylamine, trilaurylamine, dicyclohexylethylamine, cyclohexyldiethylamine, tricyclohexylamine, N,N-dimethylhexylamine, N-methyldihexylamine, N,N-dimethylcyclohexylamine, N-methyldicyclohexylamine, N, N-diethylethanolamine, N,N-dimethylethanolamine, N-ethyldiethanolamine, triethanolamine, tribenzylamine, N,N-dimethylbenzylamine, diethylbenzylamine, triphenylamine, N,N-dimethylamino-p-cresol, N,N-dimethylaminomethylphenol, 2-(N,N-dimethylaminomethyl)phenol, N,N-dimethylaniline, N,N-diethylaniline, pyridine, quinoline, N-methylmorpholine, N-methylpiperidine, and 2-(2-dimethylaminoethoxy)-4-methyl-1,3,2-dioxabornane;
tertiary polyamines such as tetramethylethylenediamine, pyrazine, N,N'-dimethylpiperazine, N,N'-bis((2-hydroxy)propyl)piperazine, hexamethylenetetramine, N,N,N',N'-tetramethyl-1,3-butaneamine, 2-dimethylamino-2-hydroxypropane, diethylaminoethanol, N,N,N-tris(3-dimethylaminopropyl)amine, 2,4,6-tris(N,N-dimethylaminomethyl)phenol, and heptamethylisobiguanide;
imidazole compounds such as imidazole, N-methylimidazole, 2-methylimidazole, 4-methylimidazole, N-ethylimidazole, 2-ethylimidazole, 4-ethylimidazole, N-butylimidazole, 2-butylimidazole, N-undecylimidazole, 2-undecylimidazole, N-phenylimidazole, 2-phenylimidazole, N-benzylimidazole, 2-benzylimidazole, 2-mercaptoimidazole, 2-mercapto-N-methylimidazole, 2-mercaptobenzimidazole, 3-mercapto-4-methyl-4H-1,2,4-triazole, 5-mercapto-1-methyltetrasole, 2,5-dimercapto-1,3,4-thiadiazole, 1-benzyl-2-methylimidazole, N-(2'-cyanoethyl)-2-methylimidazole, N-(2'-cyanoethyl)-2-undecylimidazole, N-(2'-cyanoethyl)-2-phenylimidazole, 3,3-bis(2-ethyl-4-methylimidazolyl)methane,
and adducts of alkylimidazole and isocyanuric acid; and amidines such as 1,8-diazabicyclo[5.4.0]undecene-7, 1,5-diazabicyclo[4.3.0]nonene-5, and 6-dibutylamino-1,8-diazabicyclo[5.4.0]undecene-7.

### (2) Complexes of amines (1) with borane and boron trifluoride.

### (3) Phosphines:

trimethylphosphine, triethylphosphine, triisopropylphosphine, tri-n-butylphosphine, tri-n-hexylphosphine, tri-n-octylphosphine, tricyclohexylphosphine, triphenylphosphine, tribenzylphosphine, tris(2-methylphenyl)phosphine, tris(3-methylphenyl)phosphine, tris(4-methylphenyl)phosphine, tris(diethylamino)phosphine, tris(4 methylphenyl)phosphine, dimethylphenylphosphine, diethylphenylphosphine, dicyclohexylphenylphosphine, ethyldiphenylphosphine, diphenylcyclohexylphosphine, and chlorodiphenylphosphine.

### (4) Quaternary ammonium salts:

tetramethylammonium chloride, tetramethylammonium bromide, tetramethylammonium acetate, tetraethylammonium chloride, tetraethylammonium bromide, tetraethylammonium acetate, tetra-n-butylammonium fluoride, tetra-n-butylammonium chloride, tetra-n-butylammonium bromide, tetra-n-butylammonium iodide, tetra-n-butylammonium acetate, tetra-n-butylammonium borohydride, tetra-n-butylammonium hexafluorophosphite, tetra-n-butylammonium hydrogensulfite, tetra-n-butylammonium tetrafluoroborate, tetra-n-butylammonium tetraphenylborate, tetra-n-butylammonium p-toluenesulfonate, tetra-n-hexylammonium chloride, tetra-n-hexylammonium bromide, tetra-n-hexylammonium acetate, tetra-n-octylammonium chloride, tetra-n-octylammonium bromide, tetra-n-octylammonium acetate, trimethyl-n-octylammonium chloride, trimethyldecylammonium chloride, trimethyldodecylammonium chloride, trimethylcetylammonium chloride, trimethyllaurylammonium chloride, trimethylbenzylammonium chloride, trimethylbenzylammonium bromide, triethyl-n-octylammonium chloride, triethylbenzylammonium chloride, triethylbenzylammonium bromide, tri-n-butyl-n-octylammonium chloride, tri-n-butylbenzylammonium fluoride, tri-n-butylbenzylammonium chloride, tri-n-butylbenzylammonium bromide, tri-n-butylbenzylammonium iodide, n-butyldimethylbenzylammonium chloride, n-octyldimethylbenzylammonium chloride, decyldimethylbenzylammonium chloride, dodecyldimethylbenzylammonium chloride, cetyldimethylbenzylammonium chloride, lauryldimethylbenzylammonium chloride, methyltriphehylammonium chloride, methyltribenzylammonium chloride, methyltriphenylammonium bromide, methyltribenzylammonium bromide, ethyltriphenylammonium chloride, ethyltribenzylammonium chloride, ethyltriphenylammonium bromide, ethyltribenzylammonium bromide, n-butyltriphenylammonium chloride, n-butyltribenzylammonium chloride, n-butyltriphenylammonium bromide, n-butyltribenzylammonium bromide, 1-methylpyridinium chloride, 1-methylpyridinium bromide, 1-ethylpyridinium chloride, 1-ethylpyridinium bromide, 1-n-butylpyridinium chloride, 1-n-butylpyridinium bromide, 1-n-hexylpyridinium chloride, 1-n-hexylpyridinium bromide, 1-n-octylpyridinium bromide, 1-n-dodecylpyridinium chloride, 1-n-dodecylpyridinium bromide, 1-n-cetylpyridinium chloride, 1-n-cetylpyridinium bromide, 1-phenylpyridinium chloride, 1-phenylpyridinium bromide, 1-benzylpyridinium chloride, 1-benzylpyridinium bromide, 1-methylpicolinium chloride, 1-methylpicolinium bromide, 1-ethylpicolinium chloride, 1-ethylpicolinium bromide, 1-n-butylpicolinium chloride, 1-n-butylpicolinium bromide, 1-n-hexylpicolinium chloride, 1-n-hexylpicolinium bromide, 1-n-octylpicolinium chloride, 1-n-octylpicolinium bromide, 1-n-dodecylpicolinium chloride, 1-n-dodecylpicolinium bromide, 1-n-cetylpicolinium chloride, 1-n-cetylpicolinium bromide, 1-phenylpicolinium chloride, 1-phenylpicolinium bromide, 1-benzylpicolinium chloride, and 1-benzylpicolinium bromide.

### (5) Quaternary phosphonium salts:

tetramethylphosphonium chloride, tetramethylphosphonium bromide, tetraethylphosphonium chloride, tetraethylphosphonium bromide, tetra-n-butylphosphonium chloride, tetra-n-butylphosphonium bromide, tetra-n-butylphosphonium iodide, tetra-n-hexylphosphonium bromide, tetra-n-octylphosphonium bromide, methyltriphenylphosphonium bromide, methyltriphenylphosphonium iodide, ethyltriphenylphosphonium bromide, ethyltriphenylphosphonium iodide, n-butyltriphenylphosphonium bromide, n-butyltriphenylphosphonium iodide, n-hexyltriphenylphosphonium bromide, n-octyltriphenylphosphonium bromide, tetraphenylphosphonium bromide, tetrakis(hydroxymethyl)phosphonium chloride, tetrakis(hydroxymethyl)phosphonium bromide, tetrakis(hydroxyethyl)phosphonium chloride, and tetrakis(hydroxybutyl)phosphonium chloride.

### (6) Tertiary sulfonium salts:

trimethylsulfonium bromide, triethylsulfonium bromide, tri-n-butylsulfonium chloride, tri-n-butylsulfonium bromide, tri-n-butylsulfonium iodide, tri-n-butylsulfonium tetrafluoroborate, tri-n-hexylsulfonium bromide, tri-n-octylsulfonium bromide, triphenylsulfonium chloride, triphenylsulfonium bromide, and triphenylsulfonium iodide.

### (7) Secondary iodonium salts:

diphenyliodonium chloride, diphenyliodonium bromide, and diphenyliodonium iodide.

### (8) Mineral acids:

mineral acids such as hydrochloric acid, sulfuric acid, nitric acid, phosphoric acid, and carbonic acid, and half esters thereof.

### (9) Lewis acids:

boron trifluoride, etherates of boron trifluoride, aluminum fluoride, aluminum chloride, triphenylaluminum, potassium octanoate, calcium acetate, tetraisopropoxytitanium, tetrabutoxytitanium, tetrachlorotitanium, 2-ethylhexyl titanate, dimethyltin oxide, dimethyltin dichloride, dibutyltin diacetate, dibutyltin acetate, dibutyltin dilaurate, dibutyltin laurate, dibutyltin octanoate, dibutyltin bis(dodecylmercaptide), dibutyltin bis(isooctylthioglycolate), dibutyltin oxide, butyltin trichloride, dibutyltin dichloride, tributyltin chloride, tetrabutyltin, dioctyltin diacetate, dioctyltin acetate, dioctyltin dilaurate, dioctyltin laurate, dioctyltin diricinoleate, dioctyltin dioleate, dioctyltin di(6-hydroxy)caproate, dioctyltin bis(isooctylthioglycolate), dioctyltin oxide, dioctyltin dichloride, dioctyltin maleate, dioctyltin bis(butylmaleate), didodecyltin diricinoleate, tin stearate, zinc chloride, zinc acetylacetonate, copper oleate, copper acetylacetonate, iron acetylacetonate, iron naphthenate, iron lactate, iron citrate, and iron gluconate.

### (10) Organic acids and their half esters.

### (11) Silicic acid and tetrafluoroboric acid.

### (12) Peroxides:

peroxides such as cumyl peroxyneodecanoate, diisopropyl peroxydicarbonate, diallyl peroxydicarbonate, di-n-propyl peroxydicarbonate, dimyristyl peroxydicarbonate, cumyl peroxyneohexanoate, tert-hexyl peroxyneodecanoate, tert-butyl peroxyneodecanoate, tert-hexyl peroxyneohexanoate, tert-butyl peroxyneohexanoate, 2,4-dichlorobenzoyl peroxide, benzoyl peroxide, dicumyl peroxide, and di-tert-butyl peroxide; and cumene hydroperoxide and tert-butyl hydroperoxide.

### (13) Azo compounds :

2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 2-phenylazo-4-methoxy-2,4-dimethylvaleronitrile, 2, 2'-azobis(2-methylpropane), and 2,2'-azobis(2,4,4-trimethylpentane).

### (14) Condensate of aldehyde and amine compound:

reaction products of acetaldehyde and ammonia, condensates of formaldehyde and p-toluidine, condensates of acetaldehyde and p-toluidine, reaction products of formaldehyde and aniline, reaction products of acetaldehyde and aniline, reaction products of butylaldehyde and aniline, reaction products of formaldehyde, acetaldehyde and aniline, reaction products of acetaldehyde, butylaldehyde and aniline, condensates of butylaldehyde and monobutylamine, reaction products of butylaldehyde and butylideneaniline, reaction products of heptaldehycle and aniline, reaction products of tricrotonylidene and tetramine, condensates of α-ethyl-β-propylacrolein and aniline, and condensates of formaldehyde and alkylimidazole.

### (15) Guanidine compounds:

diphenylguanidine, phenyltolylguanidine, phenylxylylguanidine, tolylxylylguanidine, di-o-tolylguanidine, o-tolylguanide, diphenylguanidine phthalate, tetramethylguanidine, and di-o-tolylguanidine salts of dicatechol borate.

### (16) Thiourea compounds:

thiocarboanilide, di-o-tolylthiourea, ethylenethiourea, diethylthiourea, dibutylthiourea, dilaurylthiourea, trimethylthiourea, dimethylethylthiourea, and tetramethylthiourea.

### (17) Thiazole compounds:

2-mercaptobenzothiazole, dibenzothiazyl disulfide, cyclohexylamine salt of 2-mercaptobenzothiazole, 2-(2,4-dinitrophenylthio)benzothiazole, 2-(morpholinodithio)benzothiazole, 2-(2,6-dimethyl-4-morpholinothio)benzothiazole, N,N-diethylthiocarbamoyl-2-benzothiazolyl sulfide, 1,3-bis(2-benzothiazolylmercaptomethyl)urea, benzothiadiazyl thiobenzoate, 2-mercaptothiazoline, sodium salt of 2-mercaptobenzothiazole, zinc salt of 2-mercaptobenzothiazole, and complex of dibenzothiazyl disulfide and zinc chloride.

### (18) Sulfenamide compounds:

N-cyclohexyl-2-benzothiazylsulfenamide, N-tert-butyl-2-benzothiazylsulfenamide, N-tert-octyl-2-benzothiazylsulfenamide, N-oxydiethylene-2-benzothiazylsulfenamide, N,N-diethyl-2-benzothiazylsulfenamide, N,N-diisopropyl-2-benzothiazylsulfenamide, and N,N-dicyclohexyl-2-benzothiazylsulfenamide.

### (19) Thiuram compounds:

tetramethylthiuram monosulfide, tetraethylthiuram monosulfide, tetrabutylthiuram monosulfide, dipentamethylenethiuram monosulfide, tetramethylthiuram disulfide, tetraethylthiuram disulfide, tetrabutylthiuram disulfide, N,N'-dimethyl-N,N'-diphenylthiuram disulfide, N,N'-diethyl-N,N'-diphenylthiuram disulfide, dipentamethylenethiuram disulfide, dipentamethylenethiuramtetra sulfide, and cyclic thiuram.

### (20) Dithiocarbamic salts:

sodium dimethyldithiocarbamate, sodium diethyldithiocarbamate, sodium dibutyldithiocarbamate, sodium pentamethylenedithiocarbamate, sodium cyclohexylethyldithiocarbamate, potassium dimethyldithiocarbamate, zinc dimethyldithiocarbamate, zinc dimethyldithiocarbamate, zinc diethyldithiocarbamate, zinc dibutyldithiocarbamate, zinc dibenzyldithiocarbamate, zinc pentamethylenedithiocarbamate, zinc dimethylpentamethylenedithiocarbamate, zinc ethylphenyldithiocarbamate, bismuth dimethyldithiocarbamate, cadmium diethyldithiocarbamate, cadmium pentamethylenedithiocarbamate, selenium dimethyldithiocarbamate, selenium diethyldithiocarbamate, tellurium dimethyldithiocarbamate, tellurium diethyldithiocarbamate, iron dimethyldithiocarbamate, copper dimethyldithiocarbamate, diethylammonium diethyldithiocarbamate, N,N-cyclohexylammonium dibutyldithiocarbamate, piperidinium pentamethylenedithiocarbamate, cyclohexylethylammonium sodium cyclohexylethyldithiocarbamate, pipecolinium methylpentamethylenedithiocarbamate, and complex compound of zinc pentamethylenedithiocarbamate and piperidine.

### (21) Xanthic salts:

sodium isopropylxanthate, zinc isopropylxanthate, zinc butylxanthate, and disulfide dibutylxanthate.

### (22) Acid phosphoric esters:

mono- and/or dimethyl phosphate, mono- and/or diethyl phosphate, mono- and/or dipropyl phosphate, mono- and/or dibutyl phosphate, mono- and/or dihexyl phosphate, mono- and/or dioctyl phosphate, mono- and/or didecyl phosphate, mono- and/or didodecyl phosphate, mono- and/or diphenyl phosphate, mono- and/or dibenzyl phosphate, and mono- and/or didecanol phosphate.

The curing catalysts usable in the present invention are not limited to the above compounds and other compounds are usable as long as they catalyze the polymerization for curing. The above curing catalysts may be used alone or in combination of two or more. The amount of the curing catalyst to be added is preferably from 0.0001 to 10.0 parts by weight and more preferably from 0.0005 to 5.0 parts by weight per 100 parts by weight of the polymerizable composition.

The composition of the present invention may be cured by polymerization into the optical material in the presence of a stabilizer described in JP 2002-332350A. The stabilizer is preferably a halide of silicon, germanium, tin and antimony, with chlorides being preferred, trichloro or dichloro compounds being more preferred and trichloro or dichloro compounds having an alkyl group being still more preferred. Particularly preferred are dibutyltin dichloride, butyltin trichloride, dioctyltin dichloride, octyltin trichloride, dibutyldichlorogermanium, butyltrichlorogermanium, diphenyldichlorogermanium, phenyltrichlorogermanium, and triphenylantimony dichloride. These stabilizers may be used alone or in combination of two or more. The amount of the stabilizer to be added is preferably from 0.0001 to 10.0 parts by weight and more preferably from 0.0005 to 5.0 parts by weight per 100 parts by weight of the polymerizable composition.

The polymerization for curing the composition into the optical material may be performed also in the presence of a modifier for the polymerization rate, for example, a compound having at least one epoxy group in one molecule described in Japanese Patent Application No. 2004-119619. The amount of the modifier for the polymerization rate is preferably from 0.0001 to 10.0 parts by weight and more preferably from 0.0005 to 5.0 parts by weight per 100 parts by weight of the polymerizable composition.

To further enhance the utility of optical materials, the polymerization for curing the polymerizable composition may be carried out in the presence of a known additive such as antioxidants, ultraviolet absorbers, anti-yellowing agents, bluing agents and pigments. If the polymerizable composition removes easily from the inner wall of mold during the polymerization, the adhesion between the cured product being produced and the mold can be increased by the use of a known external and/or internal adhesion improver. Examples of the internal adhesion improver include silane compounds such as 3-methacryloxypropyltrimethoxysilane, 3-glycidoxypropyltrimethoxysilane, N-(2-aminoethyl)-3-aminopropyltrimethoxysilane, and 3-mercaptopropyltrimethoxysilane. The adhesion improver may be used in an amount of from 0.00001 to 5 parts by weight per 100 parts by weight of the polymerizable composition. If the polymerizable composition is difficult to be released from a mold after polymerization, the releasability of cured products is increased by the use of a known external and/or internal mold release agent. Examples of the internal mold release agents include fluorine-containing nonionic surfactants, silicon-containing nonionic surfactants, tetraalkylammonium salts, phosphoric esters, acid phosphoric esters, oxyalkylene acid phosphoric esters, alkali metal salts of acid phosphoric esters, alkali metal salts of oxyalkylene acid phosphoric esters, metal salts of higher fatty acids, esters of higher fatty acids, paraffin, waxes, higher aliphatic amides, higher aliphatic alcohols, polysiloxanes and adducts of aliphatic amine and ethylene oxide. The mold release agent may be used in an amount of from 0.00001 to 5 parts by weight per 100 parts by weight of the polymerizable composition.

The optical materials are produced, for example, by blending the components A, B, C, D and the curing catalyst with an optional additive such as the stabilizer, modifier for polymerization rate, adhesion improver or mold release agent, antioxidant, ultraviolet absorber, anti-yellowing agent, bluing agent and pigment, to prepare a uniform mixture; pouring the uniform mixture into a mold made of glass or metal; curing the mixture by polymerization under heating; and releasing the cured products from the mold.

The components A, B, C, D, the curing catalyst and the optional additive such as the stabilizer, modifier for polymerization rate, adhesion improver or mold release agent, antioxidant, ultraviolet absorber, anti-yellowing agent, bluing agent and pigment may be mixed with each other in any manner, for example, by a mixing all at once in a single container under stirring, a mixing in a single container by adding each ingredient stepwise, and a mixing where the ingredients are separately mixed in different containers in two or more portions and then the respective mixtures are combinedly mixed in a single container. The ingredients may be mixed in any orders. Although the mixing temperature and the mixing time are not specific as long as the ingredients are sufficiently mixed, excessively high temperatures and excessively long mixing times should be avoided because unfavorable reactions are caused and the viscosity becomes increased to make the operation for pouring into a mold difficult. The mixing temperature is preferably from -50 to 100°C, more preferably from -30 to 70°C, and still more preferably from -5 to 50°C. The mixing time is preferably from one minute to 12 h, more preferably from 5 min to 10 h, and still more preferably from 5 min to 6 h. In view of preventing the foaming during the pouring operation and during the polymerization for curing, it is preferred to deaerate the ingredients before, during and after mixing under reduced pressure preferably from 0.1 to 700 mmHg and more preferably from 0.5 to 300 mmHg. In view of further improving the quality of the optical materials, it is preferred to purify the ingredients before or after mixing by filtering off impurities through a filter having a pore size of about from 0.05 to 3 µm. After pouring the polymerizable composition into a mold made of glass or metal, the polymerization for curing is carried out under heating by a electric furnace, a water bath, an oil bath or without heating. The curing time is preferably from 0.1 to 100 h, and more preferably from 1 to 72 h. The curing temperature is preferably from -10 to 160°C, and more preferably from 0 to 140°C. The polymerization may include a step of holding the polymerization temperature at a specific level for predetermined period of time, a step of elevating the temperature at a rate of 0.1 to 100°C/h, a step of lowering the temperature at a rate of 0.1 to 100°C/h, or a combination thereof. In view of removing the distortion from the optical materials, it is preferred to anneal the cured products at 50 to 150°C for 10 min to 5 h. If required, the optical materials may be subjected to surface treatments for providing a hard coat, dyeing, preventing reflection, demisting, imparting impact strength.

The present invention will be explained in more detail by reference to the following example which should not be construed to limit the scope of the present invention. The properties of lenses were measured by the following methods.

### (1) Refractive Index (nD)

Measured at 25°C using a precision refractometer KPR-200 manufactured by Kalnew Co., Ltd.

### (2) Abbe's number (vD)

Measured at 25°C using a precision refractometer KPR-200 manufactured by Kalnew Co., Ltd.

### (3) Average falling ball impact energy

A steel ball was repeatedly allowed to fall from a height of 127 cm to a lens while changing from a light steel ball to a heavy steel ball. The impact energy when the lens was broken was measured. The test was repeated ten times to calculate the average value.

### SYNTHESIS EXAMPLE 1

### Preparation of PR1

A mixture of 60.0 g of Kuraray Polyol P-510 (polyester diol manufactured by Kuraray Co., Ltd. having a number average molecular weight of 483) and 120.0 g of Kuraray Polyol P-520 (polyester diol manufactured by Kuraray Co., Ltd. having a number average molecular weight of 501) was heated to 90°C and vacuum-deaerated for one hour under stirring. After mixing 152.6 g (0.58 mol) of dicyclohexylmethane 4,4'-diisocyanate (HMDI), the reaction was allowed to proceed at 130°C for 2 h, to obtain a polyurethane prepolymer (PR1)

### SYNTHESIS EXAMPLE 2

### Preparation of PR2

In the same manner as in Synthesis Example 1 using 70.2 g of Kuraray Polyol P-520 (number average molecular weight: 501) and 58.8 g of HMDI (0.22 mol), a polyurethane prepolymer (PR2) was obtained

### EXAMPLE 1

A mixture of 9.0 parts by weight of trimethylolpropane tris(3-mercaptopropionate), 7.9 parts by weight of bis(2-mercaptoethyl sulfide), 34.2 parts by weight of PR1 obtained in Synthesis Example 1, 14.9 parts by weight of dicyclohexylmethane 4,4'-diisocyanate and 34.0 parts by weight of bis(β-epithiopropyl) sulfide was mixed with 0.05 part by weight of tetra-n-butylphosphonium bromide (catalyst), 0.05 part by weight of dibutyltin dichloride (stabilizer), 0.6 part by weight of 2,2-bis(4-glycidyloxyphenyl)propane (modifier for polymerization rate) and 0.007 part by weight of NIKKOL TCP-5 (internal mold release agent manufactured by Nikko Chemicals Co., Ltd.), to obtain a homogeneous liquid. The liquid was filtered through a PTFE filter of 0.5 µm pore size. The filtrate was cast into a mold for the production of flat lens of 2.5 mm thickness and cured by polymerization in an oven while raising the temperature from 30°C to 130°C over 30 h, to produce a lens. The transparency and surface appearance of the obtained lens were good. The results of the measurements on the refractive index, Abbe's number and average falling ball impact energy are shown in Table 2.

### EXAMPLES 2-4

The procedure of Example 1 was repeated while using each composition shown in Table 1. The properties of the obtained lenses were shown in Table 2.

### COMPARATIVE EXAMPLE 1

A lens was produced in the same manner as in Example 1 except for using "EYAS" manufactured by Hoya Corporation. The results of the measurements on the refractive index, Abbe's number and average falling ball impact energy are shown in Table 2.

**Table 1**

| Examples | Composition (weight ratio) |
|---|---|
| 1 | 3TP/DMDS/PR1/HMDI/D1 = 9.0/7.9/34.2/14.9/34.0 |
| 2 | 3TP/DMDS/PR2/HMDI/D1 = 9.0/7.9/34.4/14.8/34.0 |
| 3 | 4TP/DMDS/PR2/HMDI/D1 = 8.3/7.9/34.9/14.9/34.0 |
| 4 | 3TP/4TP/DMDS/PR1/HMDI/D1 = 6.2/3.4/5.4/40.6/10.5/34.0 |

### Component A

3TP: trimethylolpropane tris(3-mercaptopropionate)
DMDS: bis(2-mercaptoethyl sulfide)
4TP: pentaerythritol tetrakis(3-mercaptopropionate)

### Component B

PR1: prepolymer produced from a 1:2 mixture of Kuraray Polyol P-510 and Kuraray Polyol P-520 and dicyclohexylmethane 4,4'-diisocyanate
PR2: prepolymer produced from Kuraray Polyol P-520 and dicyclohexylmethane 4,4'-diisocyanate

### Component C

HMDI: dicyclohexylmethane 4,4'-diisocyanate

### Component D

D1: bis(β-epithiopropyl) sulfide

**Table 2**

| | nD | νD | Average falling ball impact energy (J) |
|---|---|---|---|
| Examples | | | |
| 1 | 1.60 | 40 | > 6 |
| 2 | 1.60 | 39 | > 6 |
| 3 | 1.60 | 39 | > 6 |
| 4 | 1.60 | 40 | > 6 |

| Comparative Example | | | |
|---|---|---|---|
| 1 | 1.60 | 42 | 2.7 |

### INDUSTRIAL APPLICABILITY

The polymerizable composition of the present invention provides optical materials which have a refractive index of around 1.60, an Abbe's number of around 40 and a high strength (impact resistance), and is industrially useful.

## Claims

1. A polymerizable composition comprising:
(A) a compound having two mercapto groups in one molecule and a compound having three or more mercapto groups in one molecule;
(B) a NCO-terminated polyurethane prepolymer;
(C) a polyisocyanate compound; and
(D) an episulfide compound having in its molecule at least one structural group represented by the following formula 1: 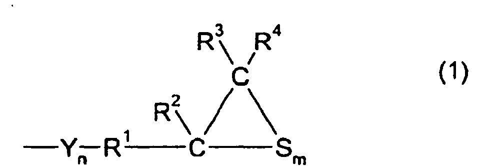
wherein R¹ is a divalent hydrocarbon group having 1 to 10 carbon atoms or a single bond, R², R³ and R⁴ are each independently a hydrocarbon group having 1 to 10 carbon atoms or hydrogen, Y is O or S, m is an integer of from 1 to 5, and n is an integer of from 0 to 5.

2. The polymerizable composition according to claim 1, wherein the molecular weight of the component A is 600 or less.

3. The polymerizable composition according to claim 1 or 2, wherein the component B is a prepolymer produced by the reaction of an aliphatic straight-chain diol or a straight-chain diol having both of an aliphatic group and an aromatic group each diol having a number average molecular weight of from 400 to 2000 with a diisocyanate having a molecular weight of 500 or less.

4. The polymerizable composition according to any one of claims 1 to 3, wherein the molecular weight of the component C is 500 or less.

5. The polymerizable composition according to any one of claims 1 to 4, wherein the component D has in its molecule two or more structural groups of the formula 1 wherein Y is S and has a molecular weight of 500 or less

6. The polymerizable composition according to any one of claims 1 to 5, comprising 1 to 40 % by weight of the component A, 1 to 70 % by weight of the component B, 1 to 50 % by weight of the component C, and 1 to 70 % by weight of the component D

7. An optical material produced by curing the polymerizable composition as defined in any one of claims 1 to 6 by polymerization.

8. A lens made of the optical material as defined in claim 7.

## Patentansprüche

1. Polymerisierbare Zusammensetzung, umfassend:
(A) eine Verbindung, die zwei Mercaptogruppen in einem Molekül aufweist, und eine Verbindung, die drei oder mehr Mercaptogruppen in einem Molekül aufweist;
(B) ein NCO-terminiertes Polyurethan-Präpolymer;
(C) eine Polyisocyanatverbindung; und
(D) eine Episulfidverbindung, die im Molekül mindestens eine durch die folgende Formel 1 dargestellte strukturelle Gruppe enthält: 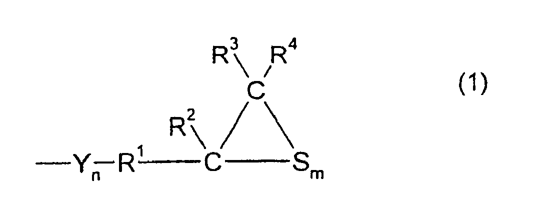
wobei R' eine divalente Kohlenwasserstoffgruppe mit 1 bis 10 Kohlenstoffatomen oder eine Einfachbindung ist, R², R³ und R⁴ jeweils unabhängig voneinander eine Kohlenwasserstoffgruppe mit 1 bis 10 Kohlenstoffatomen oder Wasserstoff sind, Y O oder S ist, m eine ganze Zahl von 1 bis 5 ist, und n eine ganze Zahl von 0 bis 5 ist.

2. Polymerisierbare Zusammensetzung nach Anspruch 1, wobei das Molekulargewicht der Komponente A 600 oder weniger beträgt.

3. Polymerisierbare Zusammensetzung nach Anspruch 1 oder 2, wobei die Komponente B ein Präpolymer ist, das hergestellt wird durch Reaktion eines aliphatischen gradkettigen Diols oder eines gradkettigen Diols, das sowohl eine aliphatische Gruppe als auch eine aromatische Gruppe aufweist, wobei jedes Diol ein zahlenmittleres Molekulargewicht von 400 bis 2000 aufweist, mit einem Diisocyanat, welches ein Molekulargewicht von 500 oder weniger aufweist.

4. Polymerisierbare Zusammensetzung nach einem der Ansprüche 1 bis 3, wobei das Molekulargewicht der Komponente C 500 oder weniger beträgt.

5. Polymerisierbare Zusammensetzung nach einem der Ansprüche 1 bis 4, wobei die Komponente D zwei oder mehr strukturelle Gruppen der Formel 1 im Molekül aufweist, wobei Y S ist, und ein Molekulargewicht von 500 oder weniger aufweist,

6. Polymerisierbare Zusammensetzung nach einem der Ansprüche 1 bis 5, umfassend 1 bis 40 Gew.-% der Komponente A, 1 bis 70 Gew.-% der Komponente B, 1 bis 50 Gew.-% der Komponente C, und 1 bis 70 Gew.-% der Komponente D.

7. Optisches Material, hergestellt durch Härten der polymerisierbaren Zusammensetzung wie in einem der Ansprüche 1 bis 6 definiert durch Polymerisation.

8. Linse, hergestellt aus dem optischen Material wie in Anspruch 7 definiert.

## Revendications

1. Composition polymérisable comprenant :
(A) un composé ayant deux groupes mercapto dans une seule molécule et un composé ayant trois ou plusieurs groupes mercapto dans une seule molécule ;
(B) un prépolymère de polyuréthane terminé en NCO ;
(C) un composé polyisocyanate ; et
(D) un composé épisulfure ayant dans sa molécule au moins un groupe structurel représenté par la formule suivante (1) 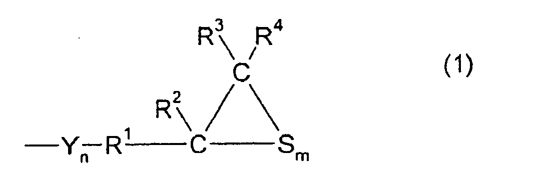
dans laquelle R¹ est un groupe hydrocarbure divalent ayant 1 à 10 atomes de carbone ou une liaison simple, R², R³ et R⁴ sont chacun indépendamment un groupe hydrocarbure ayant 1 à 10 atomes de carbone ou l'hydrogène, Y est O ou S, m est un nombre entier de 1 à 5, et n est un nombre entier de 0 à 5.

2. Composition polymérisable selon la revendication 1, dans laquelle le poids moléculaire du composant A est 600 ou moins.

3. Composition polymérisable selon la revendication 1 ou 2, dans laquelle le composant B est un prépolymère produit par la réaction d'un diol aliphatique à chaîne droite ou d'un diol à chaîne droite ayant aussi un groupe aliphatique qu'un groupe aromatique chacun diol ayant un poids moléculaire moyen en nombre de 400 à 2000 avec un diisocyanate ayant un poids moléculaire de 500 ou moins.

4. Composition polymérisable selon l'une des revendications 1 à 3, dans laquelle le poids moléculaire du composant C est 500 ou moins.

5. Composition polymérisable selon l'une des revendications 1 à 4, dans laquelle le composant D a dans sa molécule deux ou plusieurs groupes structurels de la formule 1 dans laquelle Y est S et a un poids moléculaire de 500 ou moins.

6. Composition polymérisable selon l'une des revendications 1 à 5, comprenant 1 à 40 % en poids du composant A, 1 à 70 % en poids du composant B, 1 à 50 % en poids du composant C, et 1 à 70 % en poids du composant D.

7. Matériau optique produit par durcissage de la composition polymérisable selon l'une des revendications 1 à 6 par polymérisation.

8. Lentille fabriquée à partir du matériau selon la revendication 7.
